# EUROPEAN PATENT APPLICATION

(11) **EP 3 450 139 A1**
(43) Date of publication of application: **06.03.2019**
(21) Application number: 18152737.5
(22) Date of filing: 22.01.2018
(51) Int. Cl.: B29C 64/393, H04N 1/56, B33Y 10/00, B33Y 50/02, B29C 64/106, B29C 64/112, B29C 64/118, G06T 19/20

(54) **METHOD FOR INDENTING COLORING AREAS OF COLORED 3D OBJECT**

(30) Priority: 31.08.2017 CN 201710783571
(71) Applicant: XYZprinting, Inc., New Taipei City 22201 (TW); Kinpo Electronics, Inc., New Taipei City 22201 (TW)
(72) Inventor: HSIEH, Hsin-Ta, 22201 New Taipei City (TW); HUANG, Yu-Ting, 22201 New Taipei City (TW); SHIH, Ko-Wei, 22201 New Taipei City (TW)
(74) Representative: 2K Patentanwälte Blasberg Kewitz & Reichel

(57) **Abstract**

A method for indenting coloring-areas of a colored 3D object includes: importing a 3D object; performing a slicing process on the 3D object for generating multiple object printing data-records and multiple color printing data-records of multiple printing layers; performing an indenting process on a color printing data-record of a lowest coloring-required printing layer for generating an indented color printing data-record; storing the multiple object printing data-records, the multiple color printing data-records, and the indented color printing data-record. When performing printing, a 3D printer (1) controls a 3D nozzle (12) to print slicing objects (4) of each printing layer according to the multiple object printing data-records, controls a 2D nozzle (13) to color the slicing object of the lowest coloring-required printing layer according to the indenting color printing data-record, and controls the 2D nozzle (13) to color the slicing objects (5) of the other coloring-required printing layers according to the multiple color printing data-records.

## Description

### BACKGROUND OF THE INVENTION

### Field of the Invention

The technical field relates to a colored 3D object, in particular relates to a method for indenting coloring areas of a colored 3D object.

### Description of Prior Art

As the 3D printing technology has become increasingly sophisticated and 3D printers now are designed with compact dimensions and sold at lower retail prices, 3D printers rapidly become popular. Also, some manufacturers developed 3D printers for printing color 3D models so as to increase the market acceptance of 3D printed models.

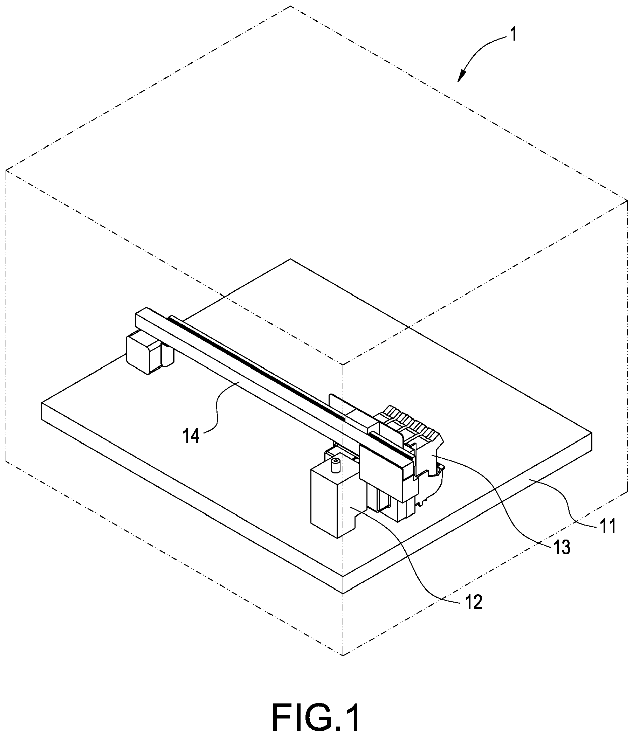

Refer to Fig. 1, Fig. 1 is a schematic diagram of a 3D printer in related art. A 3D printer 1 disclosed in Fig. 1 has a printing platform 11, a 3D nozzle 12 and a 2D nozzle 13, wherein the 3D nozzle 12 and the 2D nozzle 13 are both disposed on the same control rod 14 and both controlled by the 3D printer 1.

The 3D nozzle 12 is used for ejecting molding materials in order to print a 3D model. The 2D nozzle 13 is used for ejecting inks on the 3D model in order to color the 3D model. Thus, the 3D printer 1 effectively prints the above mentioned color 3D models.

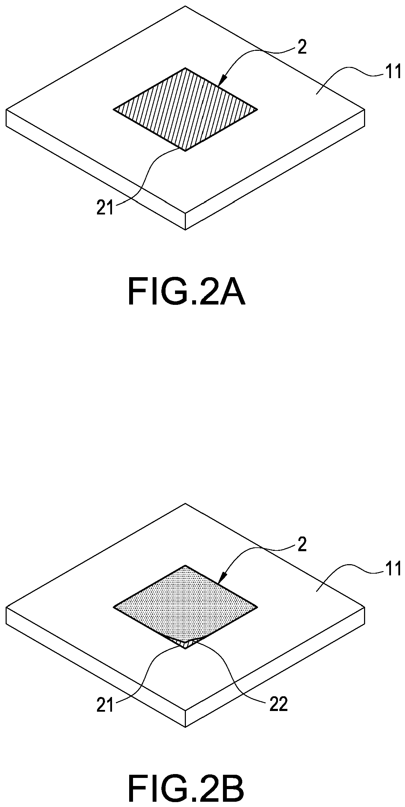

Fig. 2A is a schematic diagram of a first layer of a 3D object in related art and Fig. 2B is a schematic diagram of a second layer of the 3D object in related art. When the 3D printer 1 prints the color 3D model 2, sometimes the 3D printer 1 is required to color the bottom surface of the 3D model 2 (referring to color the whole bottom surface instead of coloring the outer profile only) depending on the content of 3D objects imported by users.

When the 3D printer 1 prints a 3D model 2 of the above mentioned type, the 3D printer controls the 3D nozzle 12 to eject molding materials on the printing platform 11 in order to print the first layer of the slicing object 21 of the 3D model 2, and controls the 2D nozzle 13 to eject inks on the slicing object 21 in order to color the slicing object 21. After the slicing object 21 is completely colored, the 3D printer 1 controls the 3D nozzle 12 to eject molding materials on the colored slicing object 21 in order to print the second layer of the slicing object 22 of the 3D model 2.

As shown in Fig. 2B, since the first layer of the slicing object 21 is covered with inks and the inks weaken the adhesive capacity of the molding materials which lowers the adhesive capacity between the first layer of the slicing object 21 and the second layer of the slicing object 22 and generates issues such as separated layers or warpage weakening the overall structure of the 3D model 2.

Further, the 3D printer 1 first ejects molding materials on the printing platform 11 to print the first layer of the slicing object 21 then colors the first layer of the slicing object 21, the adhesive capacity between the first layer of the slicing object 21 and the printing platform 11 is relatively high. Nonetheless, when the 3D model is completely printed and the user takes the 3D model off the printing platform 11, the first layer of the slicing object 21 may attach to the printing platform 11 and be separated from the second layer of the slicing object 22.

As mentioned above, it is desired to increase the structure strength of a color 3D model (in particular a color 3D model having a coloring-requirement on its bottom surface) to overcome the above mentioned technical issue in the prior art.

### SUMMARY OF THE INVENTION

The disclosure is directed to a method for indenting coloring areas of a colored 3D object, which executes an indenting process on the coloring areas of the bottom surface of a 3D model to increase the adhesive capacity of the 3D model via enlarging the non-coloring area of the bottom surface.

In an example embodiment, a method for indenting coloring areas of a colored 3D object includes steps: importing a 3D object; performing a slicing process on the 3D object for generating multiple object printing data records and multiple color printing data records of multiple printing layers; performing an indenting process on a color printing data record of a lowest coloring required printing layer for generating an indented color printing data record; storing the multiple object printing data records, the multiple color printing data records and the indented color printing data record. When a 3D printer performs printing, the 3D printer controls a 3D nozzle to print slicing object of each printing layer according to the multiple object printing data records, controls a 2D nozzle to color the slicing object of the lowest coloring required printing layer according to the indented color printing data record, and controls the 2D nozzle to color the slicing objects of the other coloring required printing layers according to the color printing data records.

Each example embodiment is applicable to 3D models with coloring-requirement on bottom surfaces. Specifically, the method of the disclosed example performs indenting process on coloring areas of a bottom surface of a 3D model to enlarge the non-coloring area of the bottom surface, and to increase the adhesive capacity between multiple slicing objects via enlarging the non-coloring area of the bottom surface to further enhance the overall structure strength of the 3D model.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a schematic diagram of a 3D printer in related art;
Fig. 2A is a schematic diagram of a first layer of a 3D object in related art;
Fig. 2B is a schematic diagram of a second layer of the 3D object in related art;
Fig. 3A is an indenting flowchart according to an example embodiment;
Fig. 3B is a printing flowchart according to an example embodiment;
Fig. 4A is a schematic diagram of a first layer of a 3D object according to an example embodiment;
Fig. 4B is a schematic diagram of an indented first layer of the 3D object according to the example embodiment;
Fig. 5 is a stacking schematic diagram of the slicing object according to the example embodiment;
Fig. 6 is an indenting flowchart according to another example embodiment; and
Fig. 7 is an indenting direction determining schematic diagram according to the example embodiment.

### DETAILED DESCRIPTION OF THE INVENTION

In cooperation with attached drawings, the technical contents and detailed description of the disclosed example are described thereinafter according to a preferable embodiment, being not used to limit its executing scope. Any equivalent variation and modification made according to appended claims is all covered by the claims claimed by the disclosed example.

Above mentioned previously, the objective of each example embodiment is about performing an indenting process on a color printing data record of a bottom when the bottom of a 3D model requires coloring so as to increase the adhesive capacity of the bottom object via enlarging the non-coloring area of the bottom object to further enhance the overall structure strength of the 3D model.

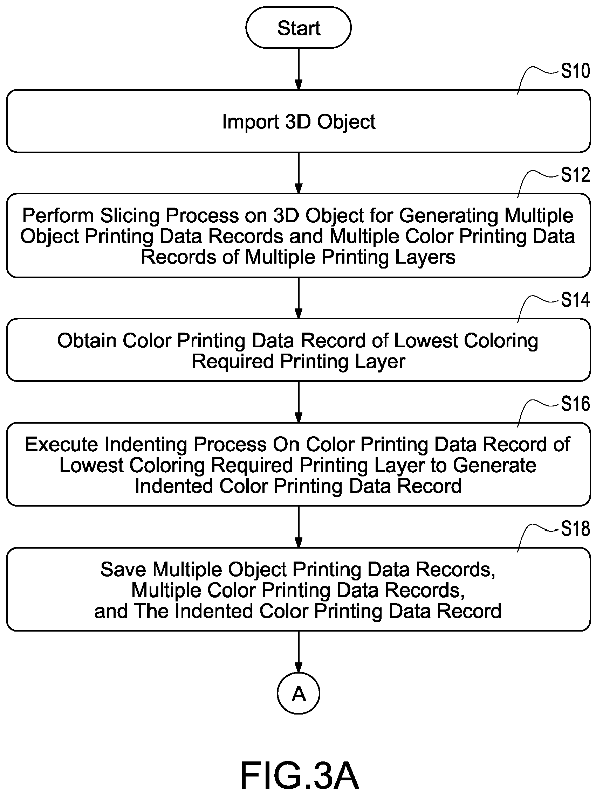

Fig. 3A is an indenting flowchart according to an example embodiment. A method for indenting coloring areas of the disclosed example (referred as indenting method in the following) is primarily applied to a 3D printer 1 as shown in Fig. 1, but the scope is not limited thereto.

In an embodiment, the 3D model 1 has a printing platform 11, and a 3D nozzle 12 used for ejecting molding materials on the printing platform 11 to print a 3D model, and a 2D nozzle 13 used for performing coloring via ejecting inks on the 3D model. In the embodiment, the 3D nozzle 12 uses translucent molding materials (for example transparent molding materials or semitransparent molding materials), and the indenting method of the disclosed example is primarily applied to Fused Deposition Modeling (FDM) 3D printers, but the scope is not limited thereto.

As shown in Fig. 3A, a processor of an external computer (not shown in the diagrams) or the 3D printer 1 imports a 3D object (step S10) to enable the processor to perform processing on the 3D object. Specifically, the 3D object refers to a virtual 3D object which is not yet printed and saved in a 3D file (for example, a 3D file with filename extension such as .stl, .obj, .ply etc.). The processor imports the 3D object after inputting and opening the 3D file.

The 3D file is a general format frequently used in the art and is not repeated herein.

Next, the processor performs a slicing process on the 3D object for generating multiple object printing data records and multiple color printing data records of multiple printing layers (step S12). In the embodiment, the multiple object printing data records respectively correspond to printing paths of slicing objects of each printing layer, the multiple color printing data records respectively correspond to coloring contents and/or coloring paths of the slicing objects of each printing layer.

It should be noted that the indenting method requires molding materials to print the slicing objects for each printing layer. Accordingly, the slicing process respectively generates a corresponding object printing data record for each printing layer (for example the slicing process divides the 3D object into 100 printing layers and generates 100 object printing data records at the same time). However, not all the slicing objects of each printing layer requires coloring and the slicing process only generates a color printing data record corresponding to a printing layer when slicing objects of the printing layer requires coloring. As a result, the quantity of the multiple color printing data records is less or equals to the quantity of the multiple printing layers.

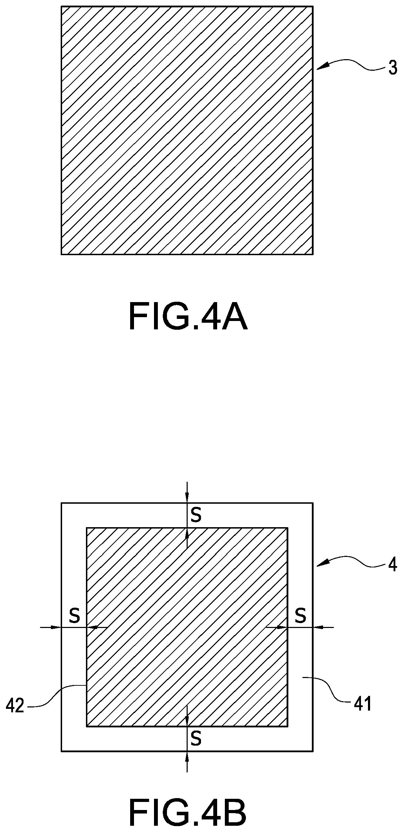

Fig. 4A is a schematic diagram of a first layer of a 3D object according to an example embodiment. The objective of the disclosed example is that the processor performs an indenting process on a color printing data record corresponding to a printing layer of a bottom of a 3D model when the bottom of the 3D model requires coloring (i.e. the outer profile and the internal structure of the slicing object 3 of the lowest coloring required printing layer both require coloring), so as to increase the adhesive capacity between the slicing object 3 and the adjacent other slicing objects via enlarging the non-coloring area of the slicing object 3 of the bottom of the 3D model.

Back to Fig. 3A, the processor executes the slicing process and then further obtains the color printing data record of the lowest coloring required printing layer among the multiple printing layers (step S14), and executes an indenting process on the color printing data record of the lowest coloring required printing layer to generate an indented color printing data record (step S16).

As mentioned above, not all the slicing objects of each printing layer requires coloring, which means not all printing layers have corresponding color printing data records. In the above mentioned Step S14, the processor obtains the color printing data record of the lowest layer which requires coloring among all printing layers (i.e. the color printing data record of the layer closest to the bottom of the 3D model). In other words, in above mentioned step S14, the processor obtains the color printing data record which is firstly generated by the slicing process.

Fig. 4B is a schematic diagram of an indented first layer of the 3D object according to the example embodiment. As shown in Fig. 4B, after step S16, the processor generates the indented color printing data record. If the processor colors the slicing object 4 of the same printing layer according to the indented color printing data record, a distance deemed as an indenting amount S will be generated between the outer profile of the color portion 42 of the colored slicing object 4 and the outer profile of the object portion 41. Thus, the slicing object 4 is allowed to keep a larger non-coloring area (the size of the non-coloring area corresponds to the size of the indenting amount S) so as to further increase the adhesive capacity between the slicing object 4 and other slicing objects.

In another embodiment, the processor may generate the indented color printing data record and also an adhesives data record upon the non-coloring area. Thus, if the processor colors the slicing object 4 of the same printing layer according to the indented color printing data record (with the adhesives data record), the processor may further coat adhesives on the non-coloring area of the slicing object 4 to further enhance the adhesive capacity between the slicing object 4 and other adjacent slicing objects.

It should be noted that, in step S16, the processor may further confirm the content of the color printing data record of the lowest coloring required printing layer for determining if executing an indenting process is required. As mentioned above, the objective of the disclosed example is to increase the overall structure strength of the 3D model. Accordingly, as long as the slicing object on the bottom of the 3D model has sufficient adhesive capacity, the processor is not required to execute the above mentioned indenting process on the color printing data record of the lowest coloring required printing layer.

Specifically, in step S16, the processor determines if the color printing data record of the lowest coloring required printing layer is as the slicing object 3 shown in Fig. 4A (which is full of inks), or the ink quantity exceeds a certain ratio of the whole slicing object 3. In addition, when the processor determines the content of the color printing data record reaches a predetermined indenting standard (for example the coloring area is larger than 80% area of the whole slicing object 3), the processor executes the indenting process to generate the indented color printing data record. Thus, the quality of the printed 3D model by the 3D printer 1 is effectively increased.

It should be noted that, in the embodiment, the processor performs an indenting process on a color printing data record of a lowest coloring required printing layer for generating an indented color printing data record, and does not execute the indenting process on the color printing data records of other printing layers. Specifically, both the outer profile and the internal structure of the slicing object of the lowest coloring required printing layer in the 3D model require coloring (for example the slicing object 3 shown in Fig. 4A) so as to assure that users can see the bottom color of the printed 3D model from a look-up angle. As for the slicing objects of other printing layers, coloring is performed on the outer profile only (i.e., a large area in the internal structure is non-coloring area). Therefore, the structure strength of the 3D model is not compromised even the indenting process is not executed on the color printing data records of the other printing layers.

After step S16, the processor saves the multiple object printing data records, the multiple color printing data records and the indented color printing data record generated by the slicing process (step S18). After step S18, the processor imports the multiple object printing data records, the multiple color printing data records and the indented color printing data record to the 3D printer 1 as shown in Fig. 1 to enable the 3D printer 1 to print the physical 3D model corresponding to the 3D object.

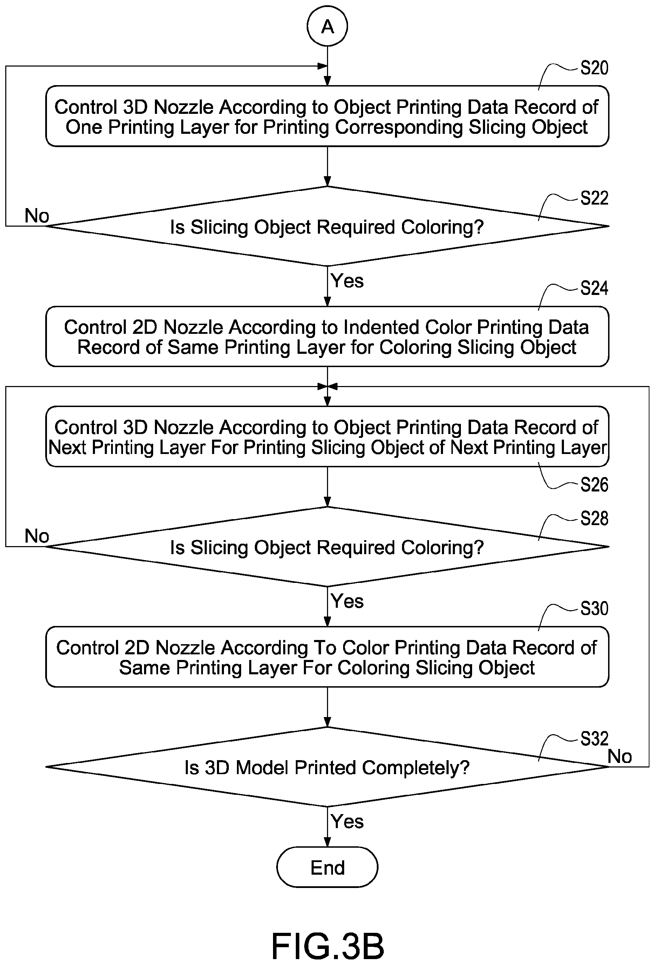

Fig. 3B is a printing flowchart according to an example embodiment. During printing, the 3D printer 1 sequentially obtains the object printing data record of a printing layer among the multiple printing layers (for example the lowest first printing layer), and controls the 3D nozzle 12 to eject the molding materials on the printing platform 11 according to the object printing data record of the first printing layer for printing the slicing object corresponding to the first printing layer (step S20).

Next, the 3D printer 1 determines if the slicing object of the first printing layer requires coloring (step S22). In an embodiment, the 3D printer 1 determines if the current printed printing layer (such as the first printing layer) has the corresponding indented color printing data record. If the current printed printing layer does not have the corresponding indented color printing data record, the 3D printer 1 determines the slicing object does not require coloring. Under the circumstance, the 3D printer 1 returns to the step S20 and obtains the object printing data record of the next printing layer (for example the second printing layer), and executes step S20 according to the object printing data record of the second printing layer. Thus, the 3D printer 1 controls the 3D nozzle 12 to eject the molding materials on the printed slicing object for printing the slicing object corresponding to the second printing layer.

It should be noted that the thickness of each printing layer of the 3D object is thin (for example 0.2mm). As long as the selected molding materials have better transmittance, even if the internal structures of the slicing objects are not colored until the third printing layer, the fourth printing layer, or the furthers, the color may be still considered as the bottom color of the 3D model. Thus, the indented color printing data record may not correspond to the lowest printing layer of the 3D object (i.e., the first printing layer), but must correspond to the lowest coloring required printing layer of the 3D object.

If the current printed printing layer does have the corresponding indented color printing data record, the 3D printer 1 controls the 2D nozzle 13 to eject inks on the slicing object according to the indented color printing data record corresponding to the current printed printing layer for coloring the slicing object (step S24).

Next, the 3D printer 1 obtains the object printing data record of the next printing layer (for example the second printing layer) after the slicing object of the above mentioned printing layer (for example the first printing layer) is printed and colored, and controls the 3D nozzle 12 to eject the molding materials according to the object printing data record of the second printing layer for printing the slicing object of the second printing layer (step S26).

Next, the 3D printer 1 further determines if the slicing object requires coloring after the slicing object of the second printing layer is printed (step S28). If the slicing object does not require coloring, the 3D printer 1 returns to the step S26 and obtains the object printing data record of the next printing layer (for example the third printing layer), and re-executes step S26 according to the object printing data record of the third printing layer for printing the slicing object corresponding to the third printing layer.

On the other hand, if the slicing object does require coloring, the 3D printer 1 obtains the color printing data record corresponding to the printing layer (for example the second printing layer) and controls the 2D nozzle 13 to eject inks according to the color printing data record corresponding to the printing layer for coloring the printed slicing object (step S30).

After step S 30, the 3D printer 1 determines if the 3D model corresponding to the 3D object is printed completely (step S32), which means determining if the current printed layer is a last printing layer of the 3D object.

If the 3D model is not printed completely (which means the current printed printing layer is not the last printing layer of the 3D object), the 3D printer 1 returns to the step S26 and obtains the object printing data record of the next printing layer (for example the third printing layer), and re-executes step S26 to step S30 according to the object printing data record of the third printing layer until all the printing layers of the 3D object are printed and colored completely.

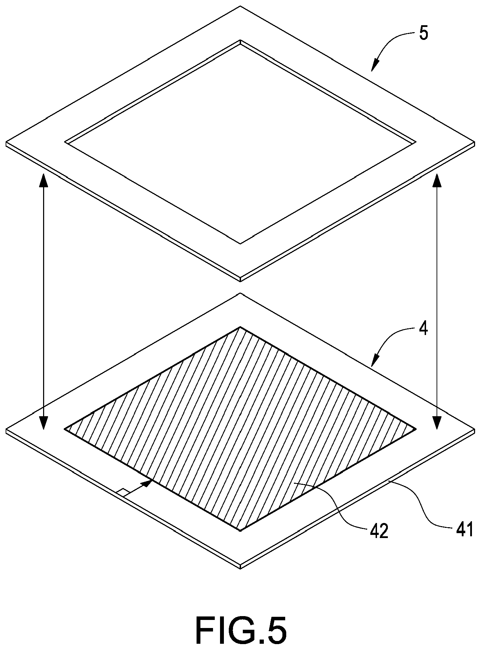

Fig. 5 is a stacking schematic diagram of the slicing object according to the example embodiment. As shown in Fig. 5, the 3D printer 1 prints the color portion 42 of the slicing object 4 of a lowest printing layer of the 3D object (for example the first printing layer) according to the indented color printing data record (i.e., the lowest printing layer here is the lowest coloring required printing layer), and the object portion 41 of the slicing object 4 has a larger non-coloring area (the non-coloring area is not covered with inks and keeps the original adhesive capability of the molding material).

Accordingly, when the 3D printer 1 prints the slicing object 5 of the second printing layer on the slicing object 4 of the first printing layer, the adhesive capacity is better. The adhesive capacity between the adjacent two slicing objects 4, 5 is not lowered because the 3D printer 1 colors the internal structure of the slicing object 4. Thus, when the 3D model is printed completely and the user wants to remove the 3D model from the printing platform 11, the two adjacent slicing objects 4 and 5 do not separate and damage the 3D model.

In the embodiment shown in Fig. 5, the 3D printer 1 controls the 2D nozzle 13 to color the slicing object 4 to form the color portion 42 according to the indented color printing data record. Therefore, the color portion 42 of the slicing object 4 may not cover the outer profile of the object portion 41 of the slicing object 4. However, the thickness of the slicing object 4 is certainly thin. Even the outer profile of the slicing object is not colored (the purpose was to increase the adhesive capacity between the slicing object 4 and the adjacent slicing object 5), as long as the outer profile of other slicing objects are colored, the overall exterior look of the 3D model is not affected.

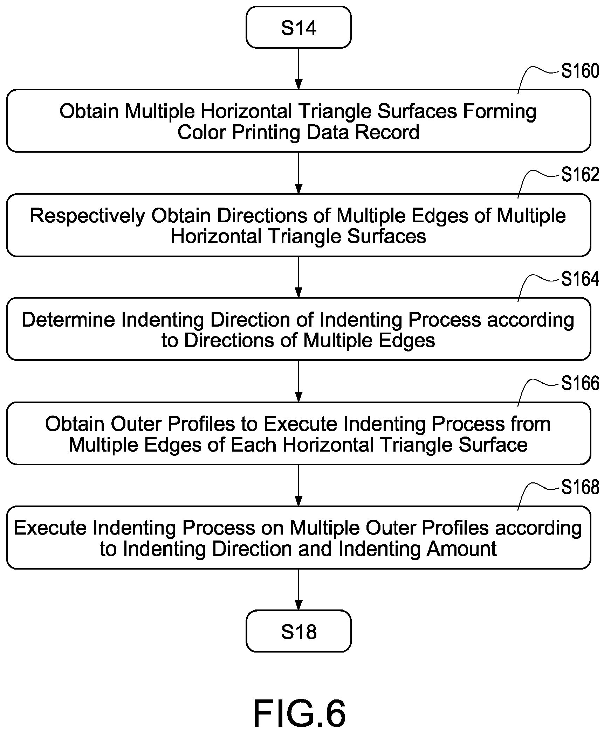

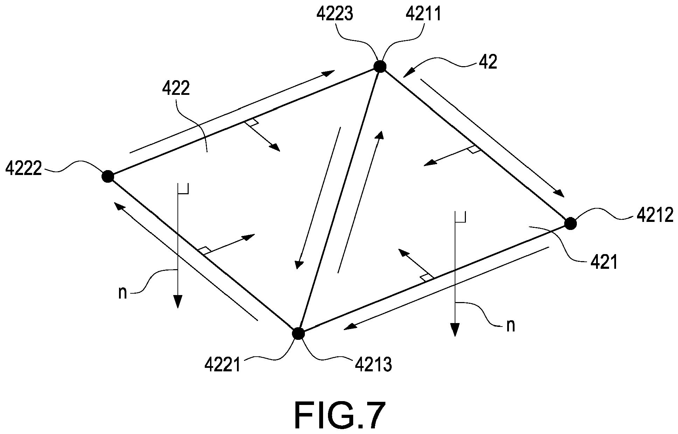

Refer to Fig. 6 and 7, Fig. 6 is an indenting flowchart according to another example embodiment, and Fig. 7 is an indenting direction determining schematic diagram according to the example embodiment. The step S16 of the flowchart shown in Fig. 3A is further elaborated in Fig. 6, which details how the processor executes the indenting process on the color printing data record of the lowest coloring required printing layer.

After the step S14 shown in the above mentioned Fig. 3A, the processor obtains the color printing data record of the lowest coloring required printing layer among the multiple printing layers of the 3D object (corresponding to the color portion 42 shown in Fig. 7). Also, the processor further performs analysis on the color printing data record so as to fetch the multiple horizontal triangle surfaces forming the color printing data record (step S160). The horizontal triangle surfaces in the embodiment refer to the triangle surfaces parallel to the printing platform 11 (i.e. parallel to the X-Y plane).

The color portion 42 formed by a first horizontal triangle surface 421 and a second horizontal triangle surface 422 is used as an example in the embodiment shown in Fig. 7. However, the color portion 42 can be formed by numerous horizontal triangle surfaces and the quantity of the horizontal triangle surfaces is not limited to two.

In step S160, the processor fetches the multiple triangle surfaces of the color printing data record and takes the triangle surfaces with surface normal vectors n facing downwards as the above mentioned horizontal triangle surfaces. Specifically, the processor determines the angle between the surface normal vector n of each triangle surface and a z-axis vector (for example (0,0,1)), and considers the surface normal vector n facing downwards when the above mentioned angle equals to or approximates to 0 degree (i.e. the surface normal vector n is parallel with the z-axis vector). Generally speaking, all triangle surfaces included in the color printing data record of the lowest coloring required printing layer are horizontal triangle surfaces with surface normal vectors n facing downwards, but the scope is not limited thereto.

After step S160, the processor respectively obtains directions of multiple edges of the multiple horizontal triangle surfaces (step S162), and determines an indenting direction of the indenting process according to the directions of the multiple edges (step S164).

In an embodiment, the processor is set up to determine with a rule where the right hand thumb points toward the direction of the surface normal vector n of a horizontal triangle surface (pointing downwards in the embodiment), and a fist making direction of the other right fingers is used as the direction of the multiple edges of the horizontal triangle surface (the rule is also known as the Right Hand Rule). In another embodiment, a designer may number the multiple vertices of the horizontal triangle surfaces directly according to the above mentioned Right Hand Rule while drawing the 3D object. Under the circumstance, the processor is not required to determine the directions of the multiple edges of the horizontal triangle surfaces.

As shown in Fig. 7, the first horizontal triangle surface 421 is formed by a first vertex 4211, a second vertex 4212 and a third vertex 4213. The surface normal vector n of the first horizontal triangle surface 421 faces downwards, so the direction of the multiple edges of the first horizontal triangle surface 421 is a clockwise direction. The second horizontal triangle surface 422 is formed by a first vertex 4221, a second vertex 4222 and a third vertex 4223. The surface normal vector n of the second horizontal triangle surface 422 faces downwards, so the direction of the multiple edges of the second horizontal triangle surface 421 is a clockwise direction.

In the embodiment, the processor uses the directions perpendicular to the right side of the multiple edges of each horizontal triangle surface 421, 422 as the indenting directions. In other words, the processor uses the directions of the sides from the outer profile of the 3D object towards the internal structure of the 3D project as the indenting directions.

Refer to Fig. 6. After step S164, the processor obtains the outer profiles that needs to execute the indenting process from the multiple edges of each of the horizontal triangle surfaces 421, 422 (step S166) and then executes the indenting process on the multiple outer profiles according to the indenting directions and the predetermined indenting amount (step S168) in order to generate the indented color printing data record.

Specifically, in step S166, the processor determines if any edge of a horizontal triangle surface (for example the first horizontal triangle surface 421) is identical to any edge of another adjacent horizontal triangle surface (for example the second horizontal triangle surface 422), and the processor considers the edge not belonging to the outer profile of the printing layer when the determining result is identical (i.e. the identical edge is shared by two horizontal triangle surfaces 421, 422), and the processor considers the edge belonging to the outer profile required to execute the indenting process when the determining result is not identical.

As shown in Fig. 7, the edge formed by the first vertex 4211 and the third vertex 4213 of the first horizontal triangle surface 21 is identical to the edge formed by the third vertex 4223 and the first vertex 4221 of the second horizontal triangle surface 422. The processor considers that the identical edge shared by the first horizontal triangle surface 421 and the second horizontal triangle surface 422 and the edge belonging to the internal structure of the printing layer instead of the outer profile. Under the circumstance, the processor does not execute the indenting process on the identical edge.

On the other hand, the edge formed by the first vertex 4211 and the second vertex 4212, the edge formed by the second vertex 4212 an the third vertex 4213, the edge formed by the first vertex 4221 and the second vertex 4222, and the edge formed by the second vertex 4222 an the third vertex 4223 are not identical to the edges of other adjacent horizontal triangle surfaces. The processor considers the above mentioned multiple edges belonging to the outer profile of the printing layer. Under the circumstance, the processor executes the indenting process on the above mentioned multiple edges.

In another embodiment, the processor also determines if any two adjacent vertices of a horizontal triangle surface (for example the first horizontal triangle surface 421) is identical to any two adjacent vertices of another adjacent horizontal triangle surface (for example the second horizontal triangle surface 422), and the processor considers the edge formed by the two adjacent vertices not belonging to the outer profile of the printing layer when the determining result is identical (i.e. the two adjacent vertices are shared by two horizontal triangle surfaces 421, 422), and the processor considers the edge formed by the two adjacent vertices belonging to the outer profile required to execute the indenting process when the determining result is not identical.

For example, the processor imports two adjacent vertices of the first horizontal triangle surface 421 to a fixed function and obtains a first value from the function calculation; and then imports another two adjacent vertices of the second horizontal triangle surface 422 to the same function and obtains a second value from the function calculation. If the first value equals to the second value, the processor determines the imported four adjacent vertices are two identical vertices shared by the two horizontal triangle surfaces 421, 422, and the processor considers the edge formed by the two adjacent vertices not belonging to the outer profile of the printing layer and is not required to execute the indenting process.

Though, the above mentioned embodiments are a part of embodiments according to the disclosed example, the processor of the disclosed example also determines if the two edges are identical or not via other technical means, and the scope of the disclosed example is not limited to the above mentioned embodiments.

In the above mentioned embodiments, the processor executes the indenting process according to the indenting direction and the predetermined indenting amount. In another embodiment, the processor dynamically calculates the indenting amount according to the following formula: S = a × w + d.

In the above mentioned formula, S is the minimum indenting amount adapted by the processor to execute the indenting process; a is an indenting parameter and is > 1, where the indenting parameter varies depending on the molding material used by the 3D nozzle 12; w is a nozzle diameter of the 3D nozzle 12 (i.e. corresponds to the width of the molding material ejected by the 3D nozzle 12); and d is the distance error of the structures of the 3D nozzle 12 and the 2D nozzle 13. Nonetheless, the above mentioned are the embodiments implemented according to the disclosed example but the scope of the invention is not limited thereto.

With the indenting method of the disclosed example, a 3D printer is assured to color the bottom of a 3D model without compromising the overall structure strength of a 3D model and provides better printing quality of a printed 3D model.

## Claims

1. A method for indenting coloring areas of colored 3D object comprising:
a) importing a 3D object from a processor;
b) performing a slicing process on the 3D object for generating multiple object printing data records and multiple color printing data records of multiple printing layers;
c) obtaining the color printing data record of a lowest coloring required printing layer of the multiple printing layers;
d) performing an indenting process on a color printing data record of the lowest coloring required printing layer for generating an indented color printing data record; and
e) storing the multiple object printing data records, the multiple color printing data records and the indented color printing data record.

2. The method for indenting coloring areas of colored 3D object of claim 1, wherein the step d) further comprises the following steps:
d1) obtaining multiple horizontal triangle surfaces (421, 422) of the color printing data record forming the lowest coloring required printing layer;
d2) respectively obtaining directions of multiple edges of the multiple horizontal triangle surfaces (421, 422);
d3) determining an indenting direction according to the directions of the multiple edges;
d4) obtaining outer profiles requiring to be processed with the indenting process from the multiple edges; and
d5) executing the indenting process on the multiple outer profiles according to the indenting direction and an indenting amount (S).

3. The method for indenting coloring areas of colored 3D object of claim 2, wherein step d4) is determining if any edge of a horizontal triangle surface (421, 422) is identical to any edge of another adjacent horizontal triangle surface (421, 422), and considers the edge as one of the outer profiles requiring to be processed with the indenting process when the determining result is not identical.

4. The method for indenting coloring areas of colored 3D object of claim 2, wherein step d4) is determining if any two adjacent vertices (4211-4213, 4221-4223) of a horizontal triangle surface (421, 422) are identical to any two vertices (4211-4213, 4221-4223) of another adjacent horizontal triangle surface (421, 422), and considers the edge formed by the two vertices(4211-4213, 4221-4223) as one of the outer profiles requiring to be processed with the indenting process when the determining result is not identical.

5. The method for indenting coloring areas of colored 3D object of claim 2, wherein a surface normal vector (n) of the multiple horizontal triangle surfaces (421, 422) is downwards, and step d2) is pointing a right thumb of a right hand toward the direction of the surface normal vector (n), and using the fist making directions of four fingers of the right hand as the directions of the multiple edges.

6. The method for indenting coloring areas of colored 3D object of claim 5, wherein step d3) uses a direction perpendicular to right sides of the multiple edges as the indenting direction.

7. The method for indenting coloring areas of colored 3D object of claim 5, wherein when an angle between the surface normal vector (n) of the multiple horizontal triangle surfaces (421, 422) and a z-axis vector equals or approaches 0 degree, the surface normal vector (n) is considered downwards.

8. The method for indenting coloring areas of colored 3D object of claim 2, wherein the multiple object printing data records, the multiple color printing data records and the indented color printing data record are used for a 3D printer (1), the 3D printer (1) has a 3D nozzle (12) used for ejecting molding materials and a 2D nozzle (13) for ejecting inks, wherein the 3D nozzle (12) uses translucent molding materials.

9. The method for indenting coloring areas of colored 3D object of claim 8, wherein the 3D nozzle (12) uses transparent or semitransparent molding materials.

10. The method for indenting coloring areas of colored 3D object of claim 8, wherein the 3D printer (1) is a Fused Deposition Modeling (FDM) type 3D printer.

11. The method for indenting coloring areas of colored 3D object of claim 8, wherein the indenting amount (S) is calculated by a formula: S = a × w + d, wherein S is an indenting amount minimum, a is an indenting parameter which is > 1, w is a nozzle diameter of the 3D nozzle (12), and d is a distance error between the 3D nozzle (12) and the 2D nozzle (13).

12. The method for indenting coloring areas of colored 3D object of claim 8, further comprising the following steps:
f) controlling the 3D nozzle (12) to print a slicing object (4) corresponding to a printing layer according to the object printing data record of the printing layer;
g) determining if the slicing object (4) requires coloring;
h) if the slicing object (4) does not require coloring, repeatedly executing step f) and step g) according to the object printing data record of next printing layer; and
i) if the slicing object (4) requires coloring, controlling the 2D nozzle (13) to color the slicing object (4) according to the indented color printing data record corresponding to the printing layer.

13. The method for indenting coloring areas of colored 3D object of claim 12, further comprising the following steps:
j) controlling the 3D nozzle (12) to print the slicing object (5) corresponding to the next printing layer according to the object printing data record of the next printing layer after step i); and
k) controlling the 2D nozzle (13) to color the slicing object (5) according to the color printing data record corresponding to the next printing layer.
